# EUROPEAN PATENT APPLICATION

(11) **EP 4 428 371 A1**
(43) Date of publication of application: **11.09.2024**
(21) Application number: 23161349.8
(22) Date of filing: 10.03.2023
(51) Int. Cl.: F04D 13/06, H02G 3/08, H02G 3/06

(54) **ARRANGEMENT COMPRISING A BOX FOR HOUSING AN ELECTRONIC CIRCUIT WITH CHANGEABLE CABLE GLAND POSITIONING**

(71) Applicant: WILO SE, 44263 Dortmund (DE)
(72) Inventor: BOUILLY, Hervé, 44263 Dortmund (DE); BOUTTIER, L., 44263 Dortmund (DE); MATERNE, Thomas, 44263 Dortmund (DE); STEIMEL, Marco, 44263 Dortmund (DE); TERRIEN, Franck, 44263 Dortmund (DE)
(74) Representative: Cohausz Hannig Borkowski Wißgott

(57) **Abstract**

The present invention refers to an arrangement (1) comprising at least a box (2) for housing in its interior (3) at least one electronic circuit (32) that is connected or connectable to at least one cable (4), a cable gland (6) that is removable connected to the box (2) by means of a locking mechanism (22, 28) to surround the cable (4) before entering the box (2), and a blind plug (8), wherein the box (2) comprises a first wall (10) with a first opening (12) therein through which the cable (4) can enter or enters the interior (3) of the box (2), and the cable gland (6) is arranged outside the interior (3) in line with the first opening (4). The box (2) comprises a second wall (11) with a second opening (13) therein, the second wall (11) being perpendicular to the first wall (10). Furthermore, the arrangement (1) is configured in that the cable gland (6) can alternatively be connected to the box (2) in line with the second opening (13) by means of a locking mechanism (22, 28) to let the cable (4) enter the interior (3) via the second opening (13), wherein the second opening (13) is closed by the blind plug (8) when unused. Thus, a 90° adjustable cable gland (6) is realized enabling selecting the direction of the cable gland (6) and the entry of the cable (4) into the box (2) according to the needs.

## Description

The invention refers to an arrangement comprising at least a box for housing in its interior at least one electronic circuit that is connected or connectable to at least one cable, a cable gland that is removable connected to the box by means of a locking mechanism to surround the cable before entering the box, and a blind plug, wherein the box comprises a first wall with a first opening therein through which the cable can enter or enters the interior of the box, and the cable gland is arranged outside the interior in line with the first opening.

Boxes housing one or more electronic circuits are widely known in the art and used for man applications, in particular in combination with specific devices to which the respective box is attached. In many cases the electronic circuit provides a specific control of the device. The boxes are usually made of plastic or metal. In order to supply electric power to the electronic circuit in the box, or in order to send control or data signals to or from the electronic circuit in a wired manner, one or more cables, electrical or even optical, must enter the box. For that an opening in provided within a wall of the box through which the respective cable extends into the interior of the box. It is also generally known in the art to use a cable gland at this opening attached to the box, i.e. at the entry of the cable.

A cable gland, also known as cord grip, cable strain relief or cable fitting attaches, is a mechanical cable entry devices and secures the end portion of the cable to the box, or to the device the box is attached to. The cable gland can also be made of plastic or metal. A major task of the cable gland is provide strain-relief for the cable. Furthermore, cable glands may also be used for sealing the cable passing through the bulkhead or gland plate which may be a component of the cable gland.

Generally, in most applications, the direction of the cable gland, i.e. the direction toward which the cable exits the box or the direction from which the cable enters the box is given and prescribed by the manufacturer of the box or the device the box is supposed to be attached. There are, however, a few applications, in particular in the industrial area, where the exit direction or enter direction of the cable may cause trouble due to spacial constraints of the environment and/ or the dimensions of the box as explained in the following.

It is, for example, known to use so called electronic extension modules in connection with the control electronics of centrifugal pumps. An electronic extension module extends the functionality of the control electronics by at least one additional function, such as, for example, an interface to connect the control electronics/ the pump to an industrial communication network like CAN (Controller Area Network), Modbus, Ethernet, Profibus or the like. Another additional function can be a relais function for switching on or off a device external to the pump depending on the pump's condition.

Extension modules that make this possible are known from European patent applications EP 4019778 A1 and EP 4019776 A1, their respective content of which is hereby incorporated by reference. The extension modules comprise a box housing an electronic circuit, and an electric connector enabling to plug the respective extension module into a respective socket provided at the pump's control electronics. This results in a certain orientation of the extension module relative to the control electronics.

There may now be the case that a cable shall enter the extension module at a side but a wall or another obstruction hinders an unrestricted, preferably straight course of the cable. With regard to an application where two pumps, and pump control electronics respectively, are arranged side by side, so called double pump application, and both control electronics shall be equipped with an extension module having a cable exiting to that side the respective other extension module is mounted, this other extension module is also an obstacle for the course of the cable. In the application where two pumps, and pump control electronics respectively, are arranged side by side, the overall dimension of the extension modules can also result in difficulties in laying the cable. In order to overcome these problems, the installer or customer needs to modify the environment or to move the product, if that is possible at all. In any case the installer or customer is dissatisfied.

It is, therefore, an object of the present invention to provide a box for housing an electronic circuit that provides in a simple manner more flexibility as to the direction the cable enters or exits the box.

This object is solved by the arrangement as claimed in claim 1. Advantageous further developments are given in the subclaims and are presented hereinafter.

According to the present invention it is proposed to further develop the arrangement described in the very first paragraph of this description in that the box comprises a second wall with a second opening therein, the second wall being perpendicular to the first wall, and that the arrangement is configured in that the cable gland can alternatively be connected to the box in line with the second opening by means of a locking mechanism to let the cable enter the interior via the second opening, wherein the second opening is closed by the blind plug when unused.

The present invention enables to alter the direction of the cable and the cable gland relative to the box in order to direct the cable in a first direction perpendicular to the first wall or in a second direction perpendicular to the second wall, according to the needs. In other words, a 90° adjustable cable gland is realized enabling selecting the direction of the cable gland and the entry of the cable into the box according to the needs. It should be note that the phrasing "the cable enters the interior" includes the meaning "the cable exits the interior" as only the viewing direction is different. Thus, the verb "to enter" can be replaced by the verb "to exit" without departing from the intended meaning. The same applies with regard to the terms "entry" and "exit". Therefore, in the following only the terms "to enter" and "entry" are used.

According to an aspect of the present invention the locking mechanism is a screw connection wherein the cable gland comprises an outer thread for engaging with an inner thread located at the first and/ or second opening. The word "at" here is to be understood in a spatial manner as becomes clear considering the following embodiments. In one embodiment a nut can provide the inner thread. The nut can be arranged in front of the first or second opening in the interior of the box to be screwed on the outer thread of the cable gland while the outer thread extends through the first or second opening. Thus, the location of the nut depends on which opening is used for the cable gland to pass through. In this embodiment, one nut is needed to secure the cable gland and the first and second opening can present smooth or unstructured inner edges.

However, in another embodiment, the inner thread can be provided at the inner edge of the first opening and another inner thread is provided at the second opening respectively. This means that the locking mechanism exists between the cable gland and the box as the cable gland can be secured directly at the box by screwing the cable gland with its outer thread into the first or second opening. Thus, there is no need to use a separate nut. This is advantageous as the nut could be lost and the mounting process becomes easier.

The blind plug can be an individual part. The blind plug can also comprise an outer thread so that the blind plug can be secured at the box by screwing the blind plug with its outer thread into a nut arranged in front of the first or second opening in the interior of the box, or by screwing the blind plug with its outer thread directly into the first or second opening.

In order to provide enough turns for the inner thread at the inner edge of the first opening and/ or second opening the width of the first and/ or second wall in the area surrounding the first and/ or second opening can be larger than outside said area. For example, an annular pedestal can be provided that surrounds and extends the first opening in the first wall and that forms one piece with the box 2 and enlarges the width of the first wall 10 locally around the first opening. In a corresponding manner, an annular pedestal can be provided that surrounds and extends the second opening in the second wall and that forms one piece with the box 2 and enlarges the width of the second wall 10 locally around the second opening.

For example, the cable gland can be a Panzergewinde (PG) cable gland according to the industrial standard DIN 40430 of February 1971, or according to industrial standard DIN EN 60423 of July 2008.

According to another embodiment of the present invention the box comprises a pluggable mechanical interface projecting from the underside of a bottom of the box, wherein the bottom is the first or second wall. In other words, one of the possible directions in which the cable can enter the box corresponds to the direction in which the box is plugged in or mounted on a device or appliance by means of the mechanical interface. Consequently, the cable can leave the box to the rear. It is clear that, in this embodiment, the box laterally projects from the device or appliance so that space is given for the cable gland and the cable to be arranged at a side of the device or appliance.

Preferably, the arrangement can be an electronic extension module for an electronic device, in particular for a control electronics in a terminal box of a centrifugal pump, the electronic extension module comprising the at least one electronic circuit and a pluggable electrical interface electrically connected to the electronic circuit and projecting from the underside of a bottom of the box, wherein the bottom is the first or second wall. Additionally, the electronic extension module can comprise the pluggable mechanical interface previously described.

In a preferred embodiment, the arrangement can comprise a bracket arranged inside the box in that the bracket cooperates with the first and second opening at the inner side of the first and second wall facing to the interior. The bracket comprises a first functional portion and a second functional portion. The second functional portion is perpendicular to the first functional portion so as to give the bracket an L-shaped structure. In other words, the first and second portion form a first and second limp of the bracket. The first functional portion comprises an opening for the cable to pass through, wherein the first functional portion is intended and configured to interact with or to form part of the locking mechanism. The second functional portion comprises the blind plug. In order words, the blind plug is an integral part of the bracket. The bracket is positioned in such a way that the first functional portion abuts the first wall with its opening in line with the first opening, and the second functional portion abuts the second wall while the blind plug closes the second opening. The use of said bracket has the advantage that when mounting the cable gland at or in one of the first or second opening the blind plug is simultaneously positioned at or in the respective other opening.

Preferably, the blind plug is seated within the second opening in a form fit manner. This improves the seal between the blind plug and the box as the sealing area is enlarged.

According to a particularly preferred embodiment, a centre of the opening in the first functional portion of the bracket and a centre of the blind plug of the bracket have the same distance to an edge that connects the first functional portion to the second functional portion. This means that the first and second functional portion have the same limb length. Additionally, a centre of the first opening and a centre of the second opening have the same distance to an edge that connects the first wall to the second wall. This construction, or more precisely, said equal distance, makes it possible to use one and the same L-shaped bracket in either of two orientations simply by flipping the bracket. This means that, the bracket can either be arranged in a first orientation in which the first functional portion cooperates with the first opening and the second functional portion cooperates with the second opening, or in a second orientation in which the first functional portion cooperates with the second opening and the second functional portion cooperates with the first opening.

In the first orientation, the first functional portion abuts the first wall with its opening in line with the first opening to receive an end portion of the cable gland, in particular the cable gland's outer thread, and the second portion abuts the second wall to close the second opening by the blind plug. In the second orientation, the first functional portion abuts the second wall with its opening in line with the second opening to receive the cable gland's end portion, in particular its outer thread, and the second portion abuts the first wall to close the first opening by the blind plug. Thus, depending on the first or second opening used for the cable to enter the box, the first or second orientation of the bracket can be chosen for mounting the cable gland on one hand and simultaneously closing the unused opening on the other hand. As a consequence there is no need to use two different brackets, i.e. brackets with different limb lengths.

If the locking mechanism is realized by means of a thread connection with the cable gland comprising an outer thread, the corresponding inner thread can be provided at the inner edge of the opening in the first functional portion of the bracket.

It should be noted that the edge of the bracket, and the edge of the box respectively, is to be understood in a spatial sense as a straight line. Thus, the edge can be an outer or inner edge. Furthermore, the distance of the individual centre to the respective edge is to be understood as the smallest distance, i.e. in a direction perpendicular to the edge.

The first functional portion of the bracket can act as a flat washer arranged between the box, i.e. the first wall or second wall, and the nut to be screwed onto the cable gland's outer thread. However, a further advantage is achieved in that the inner edge of the opening in the first functional portion of the bracket presents the inner thread. In other words, the bracket, i.e. the first functional portion acts as the nut and the outer thread of the cable gland is directly screwed in the bracket, more precisely into the opening of the first functional portion of the bracket.

The bracket can comprise at least one bump on a front side of the first functional portion so that the bump projects from the front side towards the first or second wall, whereas the bump is arranged on that side beyond the opening in the first functional portion opposite to the second functional portion.

Preferably, the box can comprise an elastic layer or coating surrounding the first and/ or second opening at the inner side of the respective first or second wall directed towards the interior of the box. The elastic layer or coating acts as a sealing when the bracket is pressed against the elastic layer or coating by tightening the cable gland. The elastic layer or coating can be made of a rubber material, in particular of an elastomer.

The core idea of the present invention can be applied twice or more times if two or more cables need to enter the box to be connected to the at least one electronic circuit. Therefore, in one embodiment, the box can comprises a third opening and a fourth opening, the third opening being arranged in the first wall next to the first opening and the fourth opening being arranged in the second wall next to the second opening. While the first cable can either enter the interior of the box via the first or second opening, the second cable can either enter the interior of the box via the third or fourth opening. A second cable gland can be used to surround the second cable before entering (or after exiting) the box, wherein the second cable gland is removable connected to the box outside the interior by means of a locking mechanism at one of the third or fourth opening while the respective other opening is closed by a second blind plug. Here, the locking mechanism can also be realized by means of a screw connection as described above with regard to the first locking mechanism and the first and second opening.

Furthermore, a second bracket as described above can be arranged inside the box. More precisely, the second bracket can comprise a first functional portion and a second functional portion perpendicular to the first functional portion so as to give the bracket an L-shaped structure. The first portion comprises an opening for the second cable passing through and the second portion comprises the second blind plug. The second bracket is arranged or can be arranged in the box in a first orientation in which the first functional portion abuts the first wall with its opening in line with the third opening and the second functional portion abuts the second wall while the second blind plug closes the fourth opening. The second bracket can alternatively be arranged in a second orientation in which the first functional portion abuts the second wall with its opening in line with the fourth opening and the second functional portion abuts the first wall while the second blind plug closes the third opening.

The second bracket can be identical to the (first) bracket previously described so that, for more details, it is referred to the previous explanations referring to the (first) bracket.

Furthermore, the third and fourth opening can be configured identical to the first and second opening so that it is referred to the previous explanations referring to the first and second opening.

Further features, characteristics, effects and advantages of the invention are explained in more detail hereinafter with reference to examples of embodiments and the accompanying figures. The reference signs contained in the figures retain their meaning from figure to figure. In the figures, reference signs always denote the same or equivalent components, areas, directions or locations as far as specified otherwise.

It should be noted that in the context of the present description the terms "comport", "comprise" or "include" in no way exclude the presence of other features. Furthermore, the use of the indefinite article for an object does not exclude the plural of said object.

### Brief description of the drawings:

- Fig. 1:: shows a side view of an arrangement according to the present invention comprising a box housing an one electronic circuit and a cable gland projecting from the box in a first direction.
- Fig. 2:: shows a side view of an arrangement according to the present invention comprising a box housing an one electronic circuit and a cable gland projecting from the box in a second direction.
- Fig. 3:: shows a perspective view of the cable gland.
- Fig. 4:: shows a perspective view on the back of a bracket used in the arrangement.
- Fig. 5:: shows a perspective view on the front of the bracket used in the arrangement.
- Fig. 6:: shows a cross sectional view of the box the cutting plane of which runs through the centre of the first and second opening without the bracket installed.
- Fig. 7:: shows a cross sectional view of the box the cutting plane of which runs through the centre of the third and fourth opening wit the bracket installed.
- Fig. 8:: shows a cross sectional view according to figure 6 with the bracket installed and the cable gland being attached at the first opening.
- Fig. 9:: shows a cross sectional view according to figure 6 with the bracket installed and the cable gland being attached at the second opening.
- Fig. 10:: shows a perspective view of the arrangement with a first cable gland being attached at the first opening and a second cable gland being attached at the third opening
- Fig. 11:: shows a perspective view of the arrangement with a first cable gland being attached at the first opening and a second cable gland being attached at the fourth opening
- Fig. 12:: shows a perspective view of the arrangement with a first cable gland being attached at the second opening and a second cable gland being attached at the fourth opening.

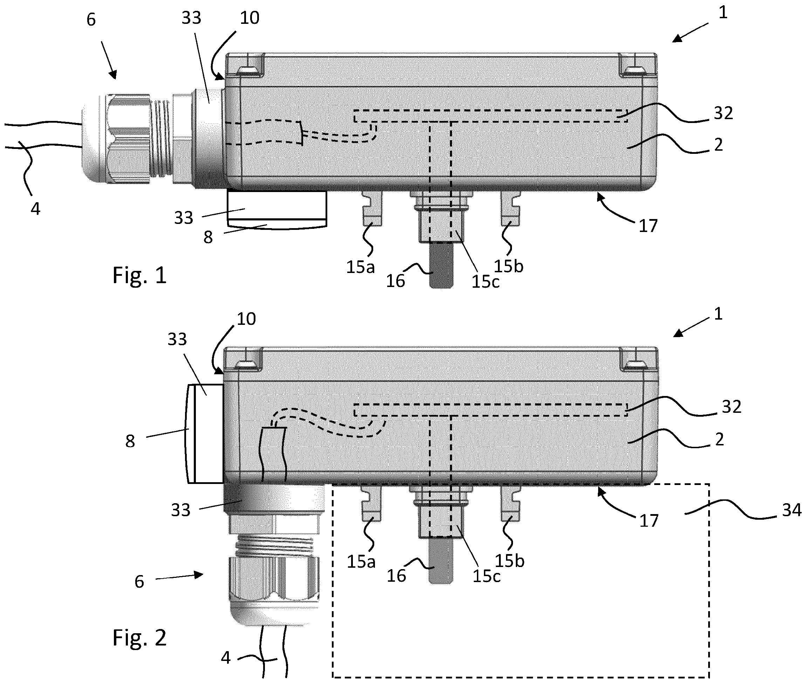

Figures 1 and 2 disclose an arrangement 1 of a box 2, a cable gland 6 and a blind plug 8. The box 2 houses in its interior 3 at least one electronic circuit 32 that is connected or connectable to at least one cable 4. The cable gland 6 is removable connected to the box 2 by means of a locking mechanism to surround the cable 4 before entering or after exiting the box 2. The cable gland 6 provides strain-relief for the cable 4 and also seals the cable 6 passing through a cap nut 24 of the cable gland 6. Although the terms "entering" or "exiting" are used in alternative form, it should be noted that they refer to one and the same physical structure with only the course of the cable being viewed from different directions. Therefore, if only one term of "entering" or "enter" is used in context of the present invention, the respective other direction, i.e. "exiting" or "exit" is included by this term.

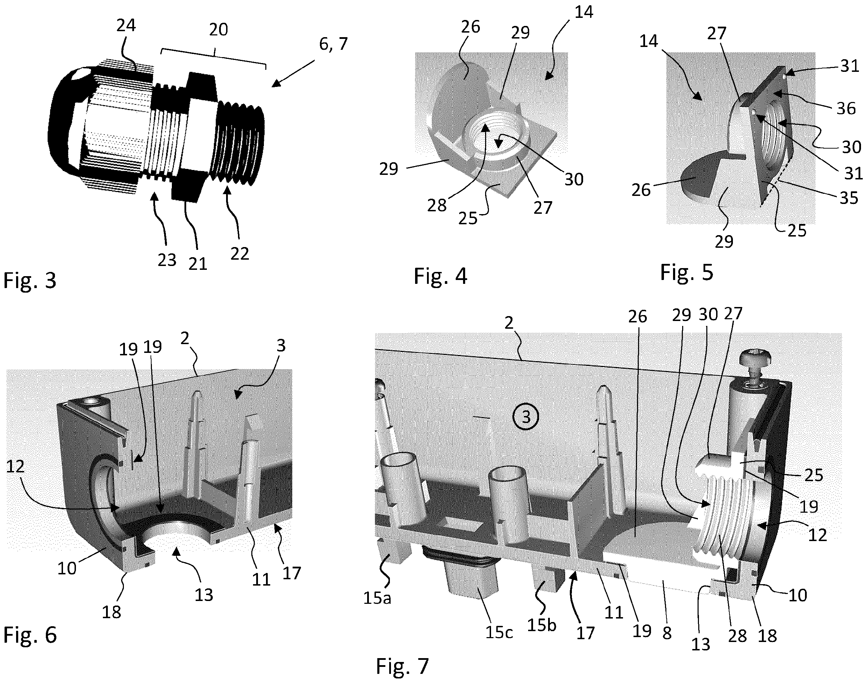

The box 2 comprises a first wall 10 with a first opening 12 therein and a second wall 11 with a second opening 13 therein, as can be seen in Figures 6 to 9 where the first and second wall 10, 11 are cut. The first and second wall 10 are perpendicular to each other. The first wall 10 is a side wall of the box 2 and the second wall 11 is a bottom of the box.

In Figure 1 the cable 4 enters the interior 3 of the box 2 though the first opening 12 in the first wall 10. Consequently, the cable gland 6 is arranged outside the interior 3 in line with the first opening 4. The blind plug 8, on the other hand, sealingly closes the second opening 13 as the latter is unused. For that, the same kind of locking mechanism is used.

When comparing Figures 1 and 2 is becomes apparent that the arrangement 1 is configured in that the cable gland 6 and the blind plug 8 can switch their position. This means that the cable gland 6 can, in alternative to the embodiment in Figure 1, be connected to the box 2 in line with the second opening 13 by means of the locking mechanism to let the cable 4 enter the interior 3 via the second opening 13, as shown in Figure 2. As a consequently, the first opening 12 is closed by the blind plug 8 as the first opening 12 is unused. Thus, the present invention enables to alter the direction of the cable 4 and the cable gland 6 relative to the box 2 in order to direct the cable 4 in a first direction perpendicular to the first wall 10 or in a second direction perpendicular to the second wall 11, according to the needs.

In the embodiments shown in the figures the locking mechanism is a screw connection consisting of an outer thread 22 and an inner thread 28. The cable gland 6 comprises the outer thread 22 for engaging with the inner thread 28, wherein the inner thread 28 is provided at the inner edge of the first opening 12. This means that the screw connection exists between the cable gland 6 and the box 2 as the cable gland 6 can be secured directly at the box 2 by screwing the cable gland's 6 outer thread 22 into the first opening 12. Thus, there is no need to use a separate nut for securing the cable gland 6 at the box.

Another outer thread corresponding to that one of the cable gland 6 is provided at the blind plug 8, and another inner thread corresponding to that one of the first opening 12 is provided at the inner edge of second opening 13 so that the blind plug 8 can be screwed into the second opening 13. The screw connection between the cable gland 6 and the first opening 12 is identical to the screw connection between the blind plug 8 and the second opening 13 so that the cable gland 6 and the blind plug 8 can change their places within the arrangement.

In order to provide enough turns for the inner thread 28 at the inner edge of the first opening 12 and second opening 13 the width of the first and/ or second wall 10, 11 in the area surrounding the first and/ or second opening is enlarged in comparison to the outside of said area. In Figures 1 and 2 the box 2 comprises a first and second ring shaped pedestal 33 surrounding each of the first and second openings 12, 13, wherein the pedestals 33 form one piece with the box 2 and enlarge the width of the first and second wall 10, 11 locally around the openings 12, 13. The pedestals 33 also enlarges the axial length of the inner thread 28 as the inner thread 28 extends to the radial inner side of the ring shaped pedestal 33 so that the cable gland 6 and the blind plug 8 can both directly be screwed into the respective ring shaped pedestal 33.

The arrangement 1 shown in figures 1 and 2 is an electronic extension module for an electronic device or appliance 34, more precisely for a control electronics in a terminal box of a centrifugal pump. The electronic extension module comprises the at least one electronic circuit 32 and a pluggable electrical interface 16 that is electrically connected to the electronic circuit 32 and that projects from the underside 17 of the second wall 11 like a tongue.

Additionally, the electronic extension module comprises a pluggable mechanical interface 15a -15c that also projects from the underside 17 of the bottom, i.e. the second wall 11. Here, the pluggable mechanical interface 15a -15c comprises a first and a second column-like locking element 15a, 15b both of which interact with a locking mechanism provided at the electronic device or appliance 34, in particular provided at the terminal box of the centrifugal pump, for securely holding the electronic extension module at the device or appliance 34, in particular at the terminal box. The mechanical interface 15a -15c further comprises a pedestal 15c. The pedestal 15c forms one piece with the box 2. The electrical interface 16 projects from the pedestal 15c.

As can be seen in Figures 2, one of the possible directions in which the cable 4 can enter the box 2 corresponds to a direction parallel to the direction in which the box 2 is plugged in or mounted on the device or appliance 34 by means of the mechanical interface 15a -15c. Consequently, as depicted in Figure 2, the cable 4 can leave the box 2 to the rear or downwards, i.e. in parallel to the extension direction of the electrical interface 16. In this embodiment, the box 2 laterally projects from the device or appliance 34 so that space is given for the cable gland 6 and the cable 4 to be arranged at a side of the device or appliance 34.

The cable gland 6 is shown in Figure 3 as a single component. The cable gland 6 is a typical PG cable gland or PG screwing comprising a hollow cylindrical body 20 with a radially projecting central portion 21 the outer contour of which is hexagonal so that an open-end spanner or a wrench can be applied to the central portion 21 to turn the body 20. To the left of the central portion 21 the body 20 presents the outer thread 22. To the left of the central portion 21 the body 20 presents a second outer thread 23 the outer diameter of which being larger than the outer diameter of the first outer thread 22 at the opposite side. A cap nut 24 with integrated sealing is screwed onto the second outer thread 23.

The arrangement 1 further comprises a bracket 14 shown in Figures 4 and 5 as a single component. The bracket 14 is supposed to be arranged inside the box 2 for cooperating simultaneously with the first and second opening 12, 13 at the inner side of the first and second wall 10, 11 facing to the interior. The bracket 14 comprises a first functional portion 25 and a second functional portion 26. The second functional portion 26 is perpendicular to the first functional portion 25 so as to give the bracket 14 an overall L-shaped structure. In other words, the first and second portion 25, 26 form a first and second limp of the bracket 14.

The first functional portion 25 comprises an opening 30 for the cable 4 passing through, wherein the first portion 25 is configured to interact with or to form part of the locking mechanism. The second functional portion 26 comprises the blind plug 8. In order words, the blind plug 8 is an integral part of the bracket 14. The bracket comprise opposing side wings 29 connecting the first and the second functional portion 25, 26 with each other in order to enhance the structural integrity and to transfer the lever arm. The first functional portion 25 comprises a nut 27 that is an integral part of the bracket 14. The inner edge of the opening 30 in the first functional portion 25 of the bracket 14 presents the inner thread 28 that continues without interruption alongside the inner side of said nut 27.

The bracket further comprises two bumps 31 on a front side 36 of the first functional portion 25 so that the bumps 31 projects from said front side 36 towards the first or second wall 10, 11, whereas the bumps 31 are symmetrically arranged on that side of the opening 30 in the first functional portion 25 opposite to the second functional portion 26. The first functional portion 25 acts as a lever arm relative to the second functional portion 25 wherein the bumps 31 slightly set up the lever arm when the bracket 14 has been inserted into the box 2.

The bracket 14 is configured such that the first and second functional portion 25, 26 of the bracket 14 have the same limb length. In other words, a centre of the opening 30 in the first functional portion 25 of the bracket 14 and a centre of the blind plug 8 of the bracket 14 have the same distance to an edge 35 that connects the first functional portion 25 to the second functional portion 26.

Reference is now made to Figures 6 and 7, showing the box 2 in more details. While in Figur 6 no other component but the box 2 is shown, Figure 7 shows the bracket 14 inserted into the box 2 as will be described in the following. As can be seen in Figure 6, the box 2 comprises an elastic layer 19 or coating surrounding the first and/ or second opening 12, 13 at the inner side of the respective first or second wall 10, 11 directed towards the interior 3 of the box 2. The elastic layer 19 or coating is an elastomer acting as a sealing when the bracket 14 is pressed against the elastic layer 19 or coating if the cable gland 6 is tightened.

The box 2 is configured such that a centre of the first opening 12 and a centre of the second opening 13 have the same distance to an edge 18 that connects the first wall 10 to the second wall 11. Thus, one and the same L-shaped bracket can be used in either of the two orientations simply by flipping the bracket. More precisely, the bracket 14 can either be arranged in a first orientation in which the first functional portion 25 cooperates with the first opening 12 and the second functional portion 26 cooperates with the second opening 13, or in a second orientation in which the first functional portion 25 cooperates with the second opening 13 and the second functional portion 26 cooperates with the first opening 12.

In Figure 7 the first orientation is realized. In this orientation, the bracket 14 is positioned in such a way that the first functional portion 25 abuts the first wall 10 with its opening 30 in line with the first opening 12 to receive the cable gland's 6 outer thread 22 and the second portion 26 abuts the second wall 11 to close the second opening 13 by the blind plug 8. Here, the blind plug 8 is seated within the second opening 13 in a form fit manner to reach good sealing properties between the blind plug 8 and the box 2.

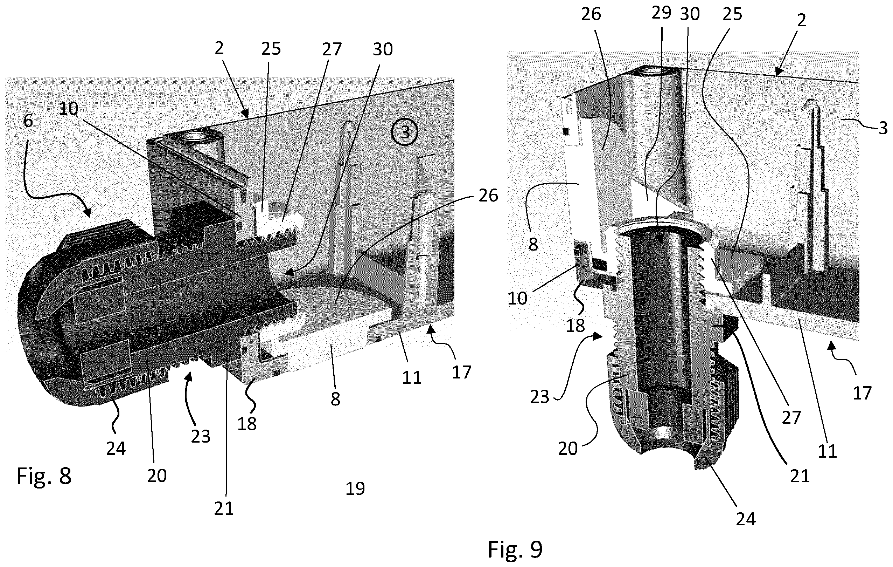

The first orientation of the bracket 14 is used in Figure 8 as well. Here, however, the cable gland 6 is also mounted, namely in that the cable gland 6 is directly screwed into the bracket 14, more precisely into the opening 30 and nut 27 of the first functional portion 25 of the bracket 14.

The second orientation of the bracket 14 is used in Figure 9. In this second orientation, the first functional portion 25 abuts the second wall 11 having the opening 30 in line with the second opening 13 to receive the cable gland's outer thread 22 and the second portion 26 abuts the first wall 10 to close the first opening 12 by the blind plug 8. Thus, depending on which opening of the first or second opening 12, 13 has been used for the cable 4 to enter the box 2, the first or second orientation of the bracket 14 can be chosen for mounting the cable gland 6 on one hand and simultaneously closing the unused opening of the box 2 on the other hand.

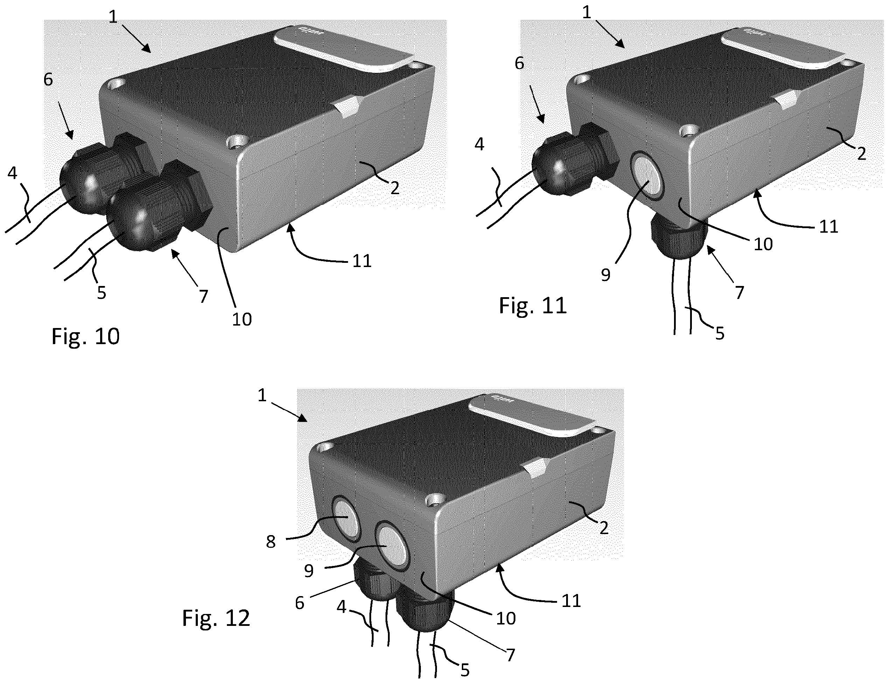

As shown in Figures 10 to 12, the core idea of the present invention can be applied to an arrangement 1 twice or even more times if two or more cables 4, 5 need to enter the box 2 to be connected to the at least one electronic circuit 32.

In the embodiments shown in Figures 10 to 12 the box 2 comprises a third opening and a fourth opening, the third opening being arranged in the first wall 10 next to the first opening 12 and the fourth opening being arranged in the second wall 11 next to the second opening 13. While the first cable 4 can either enter the interior 3 of the box 2 via the first 12 opening, see Figures 10 and 11, or the second opening 13, see Figure 12, the second cable 5 can either enter the interior 3 of the box 2 via the third opening, see Figure 10, or the fourth opening, see Figures 11 and 12 . A second cable gland 7 is used to surround the second cable 5 before entering or after exiting the box 2. The second cable gland 7 is removable connected to the box 2 outside the interior 3 by means of a locking mechanism at one of the third or fourth opening while the respective other opening is closed by a second blind plug 9. Here, the locking mechanism is also realized by means of a screw connection as described above with regard to the first locking mechanism and the first and second opening 12, 13.

In the embodiments shown in Figures 10, 11 and 12 a second bracket 14, as described above with reference to Figures 4 and 5, is arranged inside the box 2. The second bracket 14 comprises a first functional portion 25 and a second functional portion 26 perpendicular to the first functional portion 26 so as to give the bracket 14 an overall L-shaped structure. The first portion 25 comprises an opening 30 for the second cable 5 passing through and the second portion 26 comprises the second blind plug 9. The second bracket 14 can be arranged in the box 2 in that the first functional portion 25 abuts the first wall 10 with its opening 30 in line with the third opening, and the second portion 26 abuts the second wall 11 while the second blind plug 9 closes the fourth opening. This is the case in Figure 10. The second bracket 14 can alternatively be arranged in that the first functional portion 25 abuts the second wall 11 with its opening 30 in line with the fourth opening, and the second functional portion 26 abuts the first wall 10 while the second blind plug 9 closes the third opening. This is the case in Figures 11 and 12.

Any values and dimensions disclosed herein are not to be understood as being strictly limited to the exact numerical values recited. Instead, unless otherwise specified, each such dimension is intended to mean both the recited value and a functionally equivalent range surrounding that value. For example, the feature perpendicular is intended to mean "about 90°".

It should be noted that the foregoing description is given by way of example only for the purpose of illustration and is in no way limiting the scope of protection of the invention. Features of the invention indicated as "may", "exemplary", "preferred", "optional", "ideal", "advantageous", "optionally", "suitable" or the like are to be regarded as purely optional and likewise do not limit the scope of protection, which is defined exclusively by the claims. To the extent that the foregoing description mentions elements, components, process steps, values or information having known, obvious or foreseeable equivalents, such equivalents are covered by the invention as well. Likewise, the invention includes any changes, variations or modifications to embodiments which involve the substitution, addition, alteration or omission of elements, components, process steps, values or information, so long as the basic idea of the invention is still present, regardless of whether the change, variation or modification results in an improvement or deterioration of an embodiment.

Although the above description of the invention mentions a plurality of physical, non-physical or procedural features in relation to one or more specific embodiment(s), these features may also be used in isolation from this specific embodiment, at least to the extent that they do not require the mandatory presence of other features. Conversely, features mentioned in relation to one or more specific embodiment(s) may be combined as desired with each other as well as with further disclosed or undisclosed features of shown or non-shown embodiments, at least insofar as the features are not mutually exclusive or do not lead to technical incompatibilities.

### Reference List

- 1: Arrangement
- 2: Box
- 3: Interior
- 4: Cable
- 5: Second Cable
- 6: Cable Gland
- 7: Second Cable Gland
- 8: Blind Plug
- 9: Second Blind Plug
- 10: First Wall
- 11: Second Wall
- 12: First Opening
- 13: Second Opening
- 14: Bracket
- 15a, 15b, 15c: mechanical interface
- 16: Electrical Interface
- 17: Underside of Bottom
- 18: Edge
- 19: Elastic Layer
- 20: Body
- 21: Central portion
- 22: Outer Thread
- 23: Second outer Thread
- 24: Cap Nut
- 25: First functional Portion
- 26: Second functional Portion
- 27: Nut
- 28: Inner Thread
- 29: Side Wing
- 30: Opening
- 31: Bump
- 32: Electronic Circuit
- 33: Pedestal
- 34: Device/ Appliance/ Terminal Box
- 35: Edge
- 36: Front Side

## Claims

1. Arrangement (1) comprising at least a box (2) for housing in its interior (3) at least one electronic circuit (32) that is connected or connectable to at least one cable (4), a cable gland (6) that is removable connected to the box (2) by means of a locking mechanism (22, 28) to surround the cable (4) before entering the box (2), and a blind plug (8), wherein the box (2) comprises a first wall (10) with a first opening (12) therein through which the cable (4) can enter or enters the interior (3) of the box (2), and the cable gland (6) is arranged outside the interior (3) in line with the first opening (4), **characterized in that** the box (2) comprises a second wall (11) with a second opening (13) therein, the second wall (11) being perpendicular to the first wall (10), and that the arrangement (1) is configured **in that** the cable gland (6) can alternatively be connected to the box (2) in line with the second opening (13) by means of a locking mechanism (22, 28) to let the cable (4) enter the interior (3) via the second opening (13), wherein the second opening (13) is closed by the blind plug (8) when unused.

2. Arrangement (1) according to claim 1, **characterized in that** the locking mechanism (22, 28) is a thread connection and the cable gland (6) comprises an outer thread (22) for engaging an inner thread (28) located at the first and/ or second opening (12, 13).

3. Arrangement (1) according to claim 2, **characterized in that** the inner thread (28) is provided at the inner edge of the first opening (12) and another inner thread is provided at the second opening (13) respectively.

4. Arrangement (1) according to one of the foregoing claims, **characterized in that** the box (2) comprises a pluggable mechanical interface (15a, 15b) projecting from the underside (17) of a bottom of the box (2), wherein the bottom is the first or second wall (10, 11).

5. Arrangement (1) according to one of the foregoing claims, **characterized in that** the arrangement (1) forms an electronic extension module for an electronic device (34), in particular for a control electronics in a terminal box of a centrifugal pump, the electronic extension module comprising the at least one electronic circuit (32) and a pluggable electrical interface (16) electrically connected to the electronic circuit (32) and projecting from the underside (17) of a bottom of the box (2), wherein the bottom is the first or second wall (10, 11).

6. Arrangement (1) according to one of the foregoing claims, **characterized in that** a bracket (14) is arranged inside the box (2), the bracket (14) comprising a first functional portion (25) and a second functional portion (26) perpendicular to the first functional portion (25) so as to give the bracket (14) an L-shaped structure, wherein the first functional portion (25) comprises an opening (30) for the cable (4) to pass through and is configured to interact with or to form part of the locking mechanism (22, 28), and the second functional portion (26) comprises the blind plug (8), and the bracket (14) is positioned **in that** the first functional portion (25) abuts the first wall (10) with its opening (30) in line with the first opening (12), and the second functional portion (26) abuts the second wall (11) while the blind plug (8) closes the second opening (13).

7. Arrangement (1) according to claim 6, **characterized in that** a centre of the opening in the first functional portion (25) of the bracket (14) and a centre of the blind plug (8) of the bracket (14) have the same distance to an edge (35) that connects the first functional portion (25) to the second functional portion (26), and a centre of the first opening (12) and a centre of the second opening (13) have the same distance to an edge (18) that connects the first wall (10) to the second wall (11), so that the bracket (14) can alternatively be arranged in a first orientation in which the first functional portion (25) cooperates with the first opening (12) and the second functional portion (26) cooperates with the second opening (12), or in a second orientation in which the first functional portion (25) cooperates with the second opening (13) and the second functional portion (26) cooperates with the first opening (12).

8. Arrangement (1) according to claim 7, **characterized in that** in the first orientation, the first functional portion (25) abuts the first wall (10) with its opening (30) in line with the first opening (12) to receive a cable gland's (6) end portion, and the second portion (26) abuts the second wall (11) to close the second opening (13) by the blind plug (8), while in the second orientation, the first functional portion (25) abuts the second wall (11) with its opening (30) in line with the second opening (13) to receive the cable gland's (6) end portion and the second portion (25) abuts the first wall (10) to close the first opening (12) by the blind plug (8).

9. Arrangement (1) according at least to claims 2 and 6, **characterized in that** the inner thread (28) is provided at the inner edge of the opening (30) in the first functional portion (25) of the bracket (14).

10. Arrangement (1) according to one of claims 6 to 9, **characterized in that** the bracket (14) comprises at least one bump (31) on a front side (36) of the first functional portion (25) so that the bump (31) projects from the front side (36) towards the first or second wall (10, 11), whereas the bump (31) is arranged on that side beyond the opening (30) in the first functional portion (25) opposite to the second functional portion (26).

11. Arrangement (1) according to one of the foregoing claims, **characterized in that** an elastic layer (19) or coating surrounds the first and/ or second opening (12, 13) at the inner side of the respective first or second wall (10, 11) directed towards the interior (3) of the box (2).

12. Arrangement (1) according to one of the foregoing claims, **characterized in that** the box (2) comprises a third opening and a fourth opening, the third opening being arranged in the first wall (10) next to the first opening (12) and the fourth opening being arranged in the second wall (11) next to the second opening (13), so that a second cable (5) to be connected to the at least one electronic circuit (32) can either enter the interior (3) of the box (2) via the third or fourth opening, and a second cable gland (7) to surround the second cable (5) before entering the box (2) is removable connected to the box (2) outside the interior (3) by means of a locking mechanism at one of the third or fourth opening while the respective other opening is closed by a second blind plug (9).

13. Arrangement according to claim 12, **characterized in that** a second bracket (14) is arranged inside the box (2), the second bracket (14) comprising a first functional portion (25) and a second functional portion (26) perpendicular to the first functional portion (25) so as to give the bracket (14) an L-shaped structure, wherein the first functional portion (25) comprises an opening (30) for the second cable (6) passing through and the second functional portion (26) comprises the second blind plug (9), and the second bracket (14) is arranged or can be arranged in the box (2) either in a first orientation in which the first functional portion (25) abuts the first wall (10) with its opening (30) in line with the third opening and the second functional portion (26) abuts the second wall (11) while the second blind plug (9) closes the fourth opening, or in a second orientation in which the first functional portion (25) abuts the second wall (11) with its opening (30) in line with the fourth opening and the second functional portion (26) abuts the first wall (10) while the second blind plug (9) closes the third opening.
